# EUROPEAN PATENT APPLICATION

(11) **EP 1 338 392 A2**
(43) Date of publication of application: **27.08.2003**
(21) Application number: 03425011.8
(22) Date of filing: 13.01.2003
(51) Int. Cl.: B28B 17/02, B28C 7/04, C04B 33/13, C04B 33/14

(54) **A process and apparatus for preparing coloured powders destined for forming ceramic tiles**

(30) Priority: 18.02.2002 IT MO20020036
(71) Applicant: Oregon Ceramics Services S.r.l., 41042 Fiorano Modenese (Modena) (IT)
(72) Inventor: Ferrari, Carlo, 41100 Modena (IT)
(74) Representative: Gotra, Stefano

(57) **Abstract**

The process for preparing coloured powders destined for forming ceramic tiles comprises the following stages: supplying a batched quantity of powder clayey material onto a belt conveyor (2) which leads to a mixer device (5); supplying a batched quantity of at least one colorant powder onto the belt conveyor (2); supplying a batched quantity of very fine micronised silica in the guise of an additive to the powder colorant; depositing of the colorant and the additive on the belt conveyor (2) being realised by sieving of at least the colorant; mixing the colorant and the additive with the atomised material by means of the mixer device (5); collecting the mixed product at the outlet (51) of the mixer device (5) and supplying the mixed product to a press for forming ceramic tiles.

## Description

Specifically, though not exclusively, the invention is usefully applied for forming vitrified stoneware tiles.

The prior art includes plants for preparing powders destined for forming vitrified stoneware tiles. The powders prepared in these plants are used for filling the cells of dies in usual ceramic presses.

Some known plants comprise a plurality of spray nozzles which are supplied with various types of liquid slips. The powders, on exiting the atomisers, are sent by means of continuous conveyors, usually belt conveyors, to a storage area comprising a plurality of silos, each of which contains a powder product of a determined colour. The powder products of the desired colour are sent as required from the silos to the ceramic dies.

The plants are however considerably complex and require much space. In particular, they comprise a considerable number of silos (at least one for each type of powder product) as well as a relatively large number of spray nozzles and a rather complicated system for movement of the various type of coloured powders.

Also known in the prior art is the technique of dry-colouring the ceramic powders, mixing atomised or granulated powders with colorants, also in powder form.

A technique of this type is the object of Italian patent application for industrial invention no. MO99A000151, by the present applicant.

These prior art dry-colouring techniques do not however seem to be able to provide satisfactory results, with regard either to the homogeneity of the colorants and their mixing-in with the "neutral" ceramic powders (i.e. uncoloured), or to the liveliness or brightness of colouring obtained after firing, or to the effective penetration of the colorant.

The main aim of the present invention is thus to eliminate the above-mentioned limits and drawbacks in the prior art, by making available a process for preparing coloured powders destined for forming ceramic tiles, with which it is possible considerably to simplify the storing operations as well as the transport of the powder material.

A further aim of the invention is more specifically to facilitate dry-mixing , by making the colorants very fluid.

A further aim of the invention is to provide an apparatus, relatively simple and economical and of relatively modest size, for preparing coloured powders (destined for forming ceramic tiles) characterised by being highly homogenous and of very good quality.

The technical characteristics of the present invention, according to the above-mentioned aims, emerge clearly from the accompanying claims.

A specific advantage of the invention is that with respect to the prior art it improves the melting characteristics of the mixture, resulting in a lowering of the melting point of the colorants in the mixture, with consequent improvements in the intensity of coloration obtained at the end of the firing process.

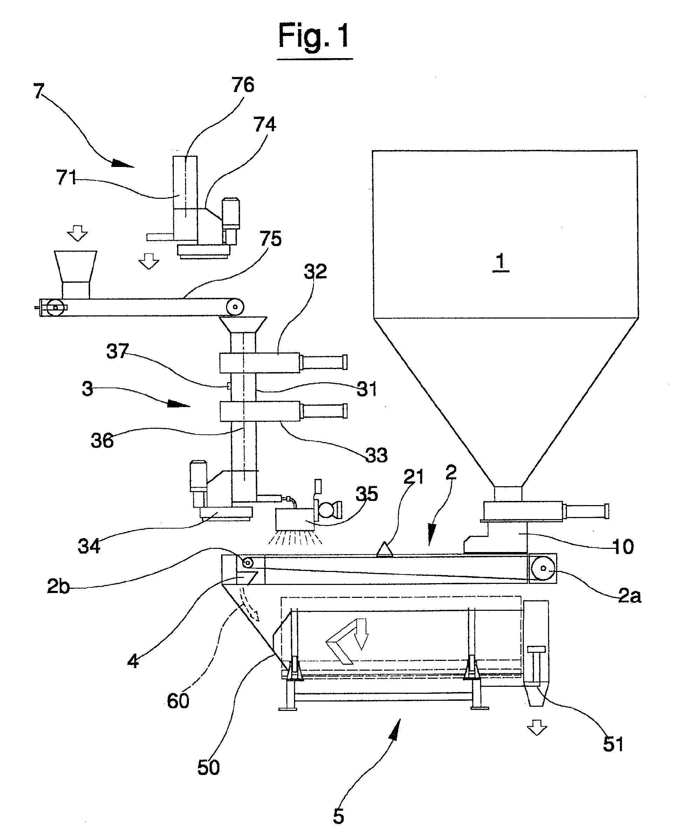

Further characteristics and advantages of the present invention will better emerge from the detailed description that follows of a preferred but non-exclusive embodiment of the invention, illustrated purely by way of a nonlimiting example in the accompanying figures of the drawings, in which: figure 1 is a diagram of an apparatus, made according to the present invention, with which the process of the invention can be carried out.

With reference to the figures of the drawings, 1 denotes a container or silo for clayey material in powder form, having at least one outlet for the material at which is positioned a batcher device 10 which unloads at an end 2a of a horizontal belt conveyor 2.

The belt conveyor 2, which is provided with a second end 2b, distant from the first 2a, is equipped with a continuous weighing device 21 which calculates the weight of the powder clayey material which the belt conveyor 2 receives from the container 1.

A supply device 3 of a colorant in powder form is located above the belt conveyor 2 between the batcher device 10 and the second end 2b, and has the function of supplying to the belt conveyor 2 batched and controlled quantities of the colorant on command of a control unit connected to the weighing device 21, so as to supply quantities of colorant in predetermined weight-percentages to the powder clayey material dispensed from the container 1.

The supply device 3 comprises, at the base of a vertical tube 31 in which the colorant is introduced from above and fluidified by injection of air, a batcher 34 which supplies a sieve 35 which deposits and distributes the colorant directly onto the belt conveyor 2.

An upper shutter 32 and a lower shutter 33 are predisposed on the vertical tube 31, and close the tube 31, isolating a predetermined volume between the shutters 32 and 33.

A nozzle 36 for injecting the air into the tube 31 is arranged below the lower shutter 33.

At least one other nozzle 37 for injection of air into the tube 31 is inserted between the upper shutter 32 and the lower shutter 33.

Injection of air into the closed space between the two shutters 32 and 33, and the injection of air from the other nozzle 37 in the tract of tube located below the lower shutter 33 are aimed at thoroughly aerating the colorant so as to prepare it for optimum mixing. To enhance further the quality of the subsequent mixing, the colorant, aerated as described along the tube 31, is conveyed by means of the batcher to the sieve 35, which sieve 35 is equipped with a vibrator.

The powder colorant preferably contains a batched additive, namely very fine micronised silica which is supplied by a supply device 7 which comprises a batcher 74 at the base of a vertical tube 71, into which vertical tube 71 the very fine micronised silica is introduced from above. The batcher 74 supplies the supply device 3 through an underlying supply conveyor 75. The very fine micronised silica is normally a silica gel.

A hopper 4 is predisposed to receive the powders unloaded from the second end 2b of the belt conveyor and conveys them to the inlet 50 of a mixer device 5.

A deflector 60 is located within the hopper 4 to turn over and close the colorant in the layer of "neutral" powders, in order to prevent adhesion of the colorant on the walls.

The mixer device 5 is provided with an outlet 51 through which the coloured powder is unloaded.

In order to obtain powders of various colours it is sufficient to provide in series on the same belt conveyor 2 two or more supply devices 3, each of which is predisposed to supply one colorant.

The described apparatus enables a process for preparing coloured powders destined to form ceramic tiles, which process comprises the following operations:
supplying a batched quantity of powder clayey material onto a belt conveyor 2 which leads to a mixer device 5;
supplying a batched quantity of at least one colorant powder onto the belt conveyor 2;
supplying a batched quantity of very fine micronised silica in the guise of an additive to the powder colorant;
the depositing of the colorant and the additive on the belt conveyor 2 being realised by sieving of at least the colorant;
mixing the colorant and the additive with the atomised material by means of the mixer device 5;
collecting the mixed product at the outlet 51 of the mixer device 5 and
supplying the mixed product to a press for forming ceramic tiles.

Preferably the very fine micronised silica is in gel form and is added to the colorant at a ratio of from 0.5% to 1.5% mass.

The addition of the very fine micronised silica to the colorant creates a considerable fluidification, which enhances mixing with the base neutral powder and also carries out a melting function for the colorant which, as its melting point drops, attacks the nuclei of the granules of the neutral powder and improves colour penetration, making the resulting colour brighter and livelier.

## Claims

1. A process for preparing coloured powders destined for forming ceramic tiles, **characterised in that** it comprises the following stages:
supplying a batched quantity of powder clayey material onto a belt conveyor (2) which leads to a mixer device (5);
supplying a batched quantity of at least one colorant powder onto the belt conveyor (2);
supplying a batched quantity of very fine micronised silica as of an additive to the powder colorant;
depositing of the colorant and the additive on the belt conveyor (2) being realised by a sieving of at least the colorant;
mixing the colorant and the additive with the atomised material by means of the mixer device (5);
collecting the mixed product at the outlet (51) of the mixer device (5) and
supplying the mixed product to a press for forming ceramic tiles.

2. The process of claim 1, **characterised in that** the very fine micronised silica is in gel form.

3. The process of claim 1 or 2, **characterised in that** the batched quantity of silica is added to the colorant at a variable amount of between 0.5% and 1.5% mass.

4. The process of claim 1, 2 or 3, **characterised in that** the sieving at least of the colorant is preceded by a fluidification of the colorant by injection of air into a predetermined mass of the colorant.

5. An apparatus for preparing coloured powders destined for forming ceramic tiles, **characterised in that** it comprises:
a container (1) for powder clayey material, having at least one outlet for the material;
a belt conveyor (2) having a first end (2a) for receiving the material which is unloaded thereon, through a batcher device (10), from the container (1) and a second end (2b) located at a distance from the first end (2a); the belt conveyor (2) being provided with a continuous weighing device (21) able to calculate a weight of the powder clayey material received by the belt conveyor (2) from the container (1);
a supply device (3) of a colorant in powder form, which supply device (3) supplies batched and controlled quantities of the colorant onto the belt conveyor (2) on command of a control unit connected to the weighing device (21), in order to supply quantities of colorant in predetermined weight percentages in a predetermined ratio to the powder clayey material dispensed from the container (1); the supply device (3) comprising, at a base of a vertical tube (31), into which the colorant is introduced from above and fluidified by means of injection of air, a batcher (34) which supplies a sieve (35) which sieve (35) deposits and distributes the colorant directly onto the belt conveyor (2);
a supply device (7) of very fine micronised silica; the supply device (7) comprising, at a base of a vertical tube (71), into which the very fine micronised silica is introduced from above, a batcher (74) which supplies, by means of an underlying supply conveyor (75), the supply device (3);
a hopper (4), predisposed to receive the product unloaded from the second end (2b) of the belt conveyor (2);
a mixer device (5) for powder material, having at least one inlet (50) for powder products to be mixed and at least one outlet (51) for a mixed product.

6. The apparatus of claim 5, **characterised in that** an upper shutter (32) and a lower shutter (33) are predisposed on the vertical tube (31) and are destined to close the vertical tube (31) in order to isolate between the upper shutter (32) and the lower shutter (33) a predetermined volume.

7. The apparatus of claim 6, **characterised in that** it comprises at least one nozzle (36) for injecting air internally of the vertical tube (31) in a part thereof underlying the lower shutter (33).

8. The apparatus of claim 7, **characterised in that** it comprises at least one nozzle (37) for injecting air internally of the vertical tube (31), which at least one nozzle (37) is arranged between the upper shutter (32) and the lower shutter (33).
